(19) Europäisches Patentamt
European Patent Office
Office européen des brevets

(11) Veröffentlichungsnummer : **0 083 709**
**B1**

(12) # EUROPÄISCHE PATENTSCHRIFT

(45) Veröffentlichungstag der Patentschrift : **20.02.85**

(51) Int. Cl.⁴ : **B 27 K 3/15**, C 08 G 59/34

(21) Anmeldenummer : **82110557.4**

(22) Anmeldetag : **16.11.82**

(54) **Verfahren zur Behandlung von Holz und Holzwerkstoffen mit wässrigen Behandlungsmitteln.**

(30) Priorität : **13.01.82 DE 3200782**

(43) Veröffentlichungstag der Anmeldung : **20.07.83 Patentblatt 83/29**

(45) Bekanntmachung des Hinweises auf die Patenterteilung : **20.02.85 Patentblatt 85/08**

(84) Benannte Vertragsstaaten : **AT BE CH DE FR GB IT LI NL SE**

(56) Entgegenhaltungen :
**EP-A- 0 009 546**
**EP-A- 0 043 901**
**DE-A- 2 911 243**
**DE-B- 2 751 869**

(73) Patentinhaber : **CHEMISCHE WERKE HÜLS AG - RSP Patente / PB 15 - Postfach 13 20 D-4370 Marl 1 (DE)**

(72) Erfinder : **Zagefka, Hans-Dieter, Dr. Im Dahläckern 11 D-4358 Haltern (DE)**
Erfinder : **Bartz, Wilfried, Dr. Am Alten Sportplatz 17 a D-4370 Marl (DE)**
Erfinder : **Konietzny, Alfred, Dr. Lipper Weg 195 D-4370 Marl (DE)**

**EP 0 083 709 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Anmeldung betrifft ein Verfahren gemäß dem Oberbegriff des Anspruchs 1.

Unter Holzschutzmitteln werden holzschützende, biozide Wirkstoffe verstanden.

Die Anmeldung führt hin zur Imprägniertechnik von Holz und verwandten Techniken. Dabei wird ein wirksamer und dauerhafter Holzschutz angestrebt. In diesem Zusammenhang wird es als wichtig angesehen, das Bindemittel und gegebenenfalls auch das Holzschutzmittel, welches ein Holzschutzmittelgemisch mit breitem Wirkungsspektrum sein kann, in ausreichender Konzentration tief in die zu schützenden Holzteile zu transportieren (Penetration) und gegebenenfalls das Holzschutzmittel dort zu fixieren. Dabei kann unter Umständen zusätzlich eine dekorative Funktion in der Oberfläche des Holzes erzielt werden.

Die Anmeldung führt nicht hin zur Lackiertechnik von Holz. Dort wird ausschließlich eine dekorative Funktion in der Holzoberfläche, jedenfalls keine Tiefenwirkung, angestrebt. Typische Zusatzstoffe sind daher Pigmente, nicht dagegen Holzschutzmittel. In der Lackiertechnik von Holz ist es üblich, vor dem Auftragen eines Lackierungsmittels, bei welchem für den Fachmann offensichtlich die Gefahr des Durchschlagens besteht, die Poren des Holzes durch eine geeignete Vorbehandlung zu verschließen, oder andere Maßnahmen zu ergreifen, beispielsweise den Einsatz von porenverschließenden Zusatzstoffen im Lackierungsmittel, die geeignet sind, die Poren hinreichend zu verschließen. Derartige Maßnahmen entfallen bei der Imprägniertechnik.

Bei dieser Sachlage sind Verfahren zur Lackierung von Holz mit wäßrigen Lackierungsmitteln, auch wenn diese ein Bindemittel enthalten, das dem anmeldungsgemäß verwendeten Bindemittel entspricht (vgl. DE-OS 29 11 243), als entfernter Stand der Technik anzusehen.

Auf dem Gebiet der Anmeldung ist bereits die DE-PS 28 38 930 bekannt. Die dort beschriebenen wäßrigen Behandlungsmittel für Holz und Holzwerkstoffe weisen den Nachteil auf, daß ihr Aufnahmevermögen für die üblicherweise als wasserlösliche Holzschutzmittel eingesetzten, biozid wirkenden, anorganischen Säuren und Salze unzureichend ist, sei es, daß die Löslichkeit dieser Zusätze in den Behandlungsmitteln unzureichend ist oder sei es, daß bei Einstellung der gewünschten Konzentration der Zusätze in den Behandlungsmitteln Koagulation des Bindemittels eintritt (vgl. EP-OS 43 901, Seite 15, Tabelle 3, Imprägnierungsmittel A + B). Dementsprechend ist die erreichbare holzschützende Wirkung verbesserungsbedürftig.

Aufgabe der vorliegenden Anmeldung war es, ein Verfahren zur Behandlung von Holz und Holzwerkstoffen mit wäßrigen Behandlungsmitteln bereitzustellen, das es gestattet, das Bindemittel und gegebenenfalls auch das Holzschutzmittel durch übliche Behandlungsverfahren in ausreichender Konzentration tief in die zu schützenden Holzteile zu transportieren und das Holzschutzmittel dort zu fixieren, d. h. ein Verfahren zum verbesserten Holzschutz bereitzustellen.

Die Aufgabe wurde erfindungsgemäß durch das Verfahren gemäß Anspruch 1 gelöst.

Die Epoxidgruppen enthaltenden 1,3-Butadienpolymerisate sind bekannt. Sie lassen sich z. B. aus Butadien(co)-polymerisaten, wie sie beispielhaft in den DE-PSS 11 86 631, 12 12 302, 12 41 119, 12 51 537, 12 92 853, 20 29 416, 21 22 956 und der DE-OS 23 61 782 beschrieben sind, durch Epoxidierung herstellen.

Die Epoxidierung dieser Polymerisate erfolgt in an sich bekannter Weise, beispielsweise wie in der DE-PS 28 38 930, Spalte 7, letzter Absatz, beschrieben, wobei gegebenenfalls auch Vinylgruppen epoxidiert werden.

Einen anderen bekannten Weg zu geeigneten Epoxidgruppen enthaltenden 1,3-Butadienpolymerisaten zu gelangen, stellt die terminale Funktionalisierung mit z. B. Epichlorhydrin von Polymeren dar, die bei dem sogenannten Living-Polymerization-Prozeß erhalten werden. Derartige 1,3-Butadienpolymerisate mit endständigen Epoxidgruppen sind handelsüblich.

Der Gehalt der Polymerisate an titrierbarem Epoxidsauerstoff (DIN 16 945) beträgt 3 bis 9 Massen-%, vorzugsweise 4 bis 8 Massen-%.

Für die erfindungsgemäßen Behandlungsmittel eignen sich als den Epoxidgruppen enthaltenden 1,3-Butadienpolymerisaten zugrunde liegende Basispolymere solche, die zumindest aus 70 Mol-% 1,3-Butadien aufgebaut sind. Als Comonomere kommen copolymerisierbare 1,3-Diolefine, wie Isopren und 1,3-Pentadien, infrage. Ferner können copolymerisierbare, $\alpha$-ungesättigte Monoolefine, wie Styrol, als Comonomere eingesetzt werden. Sie sind jedoch weniger als Comonomere bevorzugt.

Die Copolymerisate sind vorzugsweise aus mindestens 90 Mol-% 1,3-Butadien sowie maximal 10 Mol-% der Comonomeren aufgebaut. Ganz besonders bevorzugt sind Homopolybutadiene.

In den Epoxidgruppen enthaltenden Homo- oder Copolymerisaten liegen vorzugsweise weniger als 40 % der olefinischen Doppelbindungen in trans-Struktur vor. Der Gesamtdoppelbindungsgehalt soll wenigstens einer Iodzahl von 100, vorzugsweise $\geq$ 250 g Iod/100 g entsprechen, um den daraus hergestellten erfindungsgemäßen Bindemitteln selbsthärtende Eigenschaften, z. B. auf dem Wege der oxidativen Trocknung zu verleihen.

Das zahlenmittlere Molgewicht (relative Molekülmasse, $\overline{M}_n$) der Epoxidgruppen enthaltenden 1.3-Butadienpolymerisate, die sich zur Herstellung der erfindungsgemäßen Behandlungsmittel eignen, beträgt 500 bis 6 000, vorzugsweise 1 000 bis 2 500. Die Bestimmung von $\overline{M}_n$ erfolgt dampfdruckosmometrisch.

Die Aminierung der Epoxidgruppen enthaltenden 1.3-Butadienpolymerisate ist bekannt und beispielsweise in DE 27 32 736, 27 34 413, 28 28 014, 28 38 930 und 29 11 243 beschrieben. Für die Aminierung eignen sich aliphatische sekundäre und/oder primäre Amine der Formel (I) :

$$R_1—NH—R^2 \qquad (I)$$

worin $R^1$ und $R^2$ die oben angegebene Bedeutung haben. Die Verwendung sekundärer Amine wird dabei bevorzugt, insbesondere wenn statistisch epoxidierte 1.3-Butadienpolymerisate verwendet werden. Bei der nachfolgenden Quaternierung sowie der weiteren Verarbeitung hat es sich als günstig erwiesen, wenn die Summe der C-Atome in beiden Resten $R^1$ und $R^2 \leq 8$ ist.

Beispiele für geeignete Amine sind :

Methylamin, Ethylamin, Propylamine, Butylamine, Pentylamine, Hexylamine, Heptylamine, Octylamine wie n-Octylamin oder 2-Ethylhexylamin ; Dimethylamin, Diethylamin, Dipropylamin, Di-n-butylamin ; Monoethanolamin, Diethanolamin, 2-Hydroxypropylamin, 3-Hydroxypropylamin, Diisopropanolamin ; 2-Methoxyethylamin, 3-Methoxypropylamin, Bis-[2-methoxyethyl]-amin, Bis-[3-methoxypropyl]-amin.

Bevorzugt wird Diethanolamin.

Die Menge des insgesamt angebotenen Amins kann äquimolar in Bezug auf den Gehalt an Epoxidgruppen im epoxidierten Polymerisat sein. Es ist auch möglich, Amin im Überschuß zu verwenden und den nicht umgesetzten Anteil an Amin nach der Umsetzung wieder zu entfernen. Das Amin kann auch im Unterschuß zugegeben werden, so daß einige der Epoxid-Ringe unverändert erhalten bleiben.

Der Gehalt an quaternierbaren Aminogruppen muß ausreichen, um 0,05 bis 0,5, vorzugsweise 0,07 bis 0,25 Mol quartäre Ammoniumgruppen/100 g Bindemittel zu erzeugen. Vorzugsweise beträgt der Gehalt an quaternierbaren Aminogruppen 0,075 bis 0,30 Mol/100 g.

Die Quaternierung der aminierten Polymerisate, die an sich bekannt ist (DE-AS 28 31 785, DE-OS 28 47 600, Beispiel 2, DE-PS 29 11 243), erfolgt erfindungsgemäß mit niedermolekularen Monoepoxiden in Gegenwart von Wasser und Säure, wie beispielsweise in Houben-Weyl, Methoden der organischen Chemie, Bd. 11/2 (1958), S. 610 ff und Bd. 14/2 (1963), S. 444 beschrieben.

Zur Quaternierung der Aminierungsprodukte geeignete, niedermolekulare Monoepoxide entsprechen der allgemeinen Formel II

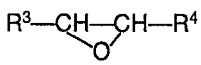

(II)

Darin bedeuten $R^3$ und $R^4$ unabhängig voneinander ein Wasserstoffatom oder einen Alkylrest mit 1 oder 2 C-Atomen, welcher gegebenenfalls mit einer Hydroxygruppe oder einem Chloratom substituiert ist.

Geeignete Monoepoxide sind z. B. Ethylenoxid, Propylenoxid, Epichlorhydrin oder Glycidol. Bevorzugt ist Ethylenoxid.

Der Zusatz von wasserverträglichen, inerten, organischen Lösemitteln, wie niederen Alkoholen, ist bei der Umsetzung in der Regel nicht erforderlich. Er erleichtert unter Umständen, insbesondere bei hohem Feststoffgehalt, die Herstellung einer wäßrigen Dispersion des Aminierungsproduktes zur Vorbereitung der Quaternierung.

Zur partiellen Quaternierung der quaternierbaren Aminogruppen wird das Monoepoxid im Unterschuß, zur quantitativen Quaternierung in der Regel in geringem Überschuß eingesetzt.

Die zur Quaternierung mit Monoepoxiden erforderliche Säure kann anorganisch oder organisch sein. Geeignete Säuren sind beispielsweise

HF, HCl, $HClO_4$, $HNO_3$, $H_2SO_4$, $H_3PO_4$, Kohlensäure ; Ameisen-, Essig-, Propion-, Benzoe-, Salicyl-, Oxal-, Bernstein-, Malein-, Phthal-, Terephthal-, Milch-, Wein- und p-Toluolsulfonsäure.

Je nach der Menge der zugesetzten Säure lassen sich pH-Werte im Bereich von 8 bis 1 einstellen. Dabei können auch die nicht quaternierten Aminogruppen in Salzform überführt werden, so daß die Löslichkeit des Polymerisates in Wasser erhöht wird.

In der Regel besitzen die quaternierten Polymerisate eine ausreichende Löslichkeit oder Dispergierbarkeit in Wasser, wenn wenigstens 0,05 mol der tertiären Aminogruppen/100 g des Aminierungsproduktes quaterniert sind.

Bevorzugt sind Polymerisate, die 0,07 bis 0,25 mol quaternierte Aminogruppen/100 g enthalten.

Die erfindungsgemäßen, quartäre Ammoniumgruppen tragenden Polymerisate sind, insbesondere im pH-Bereich von 2 bis 6, mit Wasser unbegrenzt mischbar. Der Zusatz von wasserverträglichen, organischen Lösemitteln, wie niederen Alkoholen, ist dabei in der Regel nicht erforderlich.

Die so hergestellten wäßrigen Behandlungsmittel können verschiedenen Verwendungszwecken zugeführt werden. Sie eignen sich wegen ihres unerwartet guten Penetrationsvermögens besonders als tief eindringende, tiefenwirksame wäßrige Behandlungsmittel für Holz und Holzwerkstoffe.

Für die erfindungsgemäße Verwendung der Behandlungsmittel für Holz oder Holzwerkstoffe wird der pH-Wert der wäßrigen Lösung oder Dispersion vorzugsweise auf 2 bis 6 eingestellt. Dazu werden vorzugsweise solche Säuren eingesetzt, welche eine biozide Wirkung aufweisen, wie Fluß-, Phosphor-, Phosphorig-, Arsen-, Benzoe- oder Salicylsäure, oder welche mit Metallionen Komplexe bilden, wie Weinsäure oder Ethylendiamintetraessigsäure.

Unter Holzschutzmittel wird

1) ein übliches, wasserlösliches Holzschutzmittel (gemisch),
2) ein nicht wasserlösliches, organisches Holzschutzmittel (gemisch) oder
3) ein Gemisch aus 1) und 2) verstanden.

Geeignete wasserlösliche Holzschutzmittel sind wasserlösliche, biozid wirkende, anorganische Salze und Säuren, wie beispielsweise Alkalifluoride, Alkaliarsenate, Silicofluoride, Hydrogenfluoride, Borverbindungen (Borsäure, Borate) und Salze oder Verbindungen des Bleis, Zinns, Cadmiums, Nickels, Kobalts, Mangans, Kupfers, Quecksilbers, Chroms und Zinks.

Geeignete, nicht wasserlösliche Holzschutzmittel sind beispielsweise 2,5-Dimethylfuran-3-carbonsäure-N-methoxy-N-cyclohexylamid, Tributylzinnbenzoat, Tributylzinnnaphthenat, γ-Hexachlorcyclohexan, Pentachlorphenol-Laurat, 2-Mercaptobenzthiadiazol-2, Methoxycarbonyl-amino-benzimidazol und N,N-Dimethyl-N'-phenyl-N'-fluordichlormethylthiosulfamid. Bei unzureichender Löslichkeit derselben können organische, wasserverträgliche Lösemittel, wie niedere Alkohole und Ketone, zugesetzt werden.

Geeignete Zusatzstoffe gemäß Merkmal 3 sind beispielsweise Pigmente, Hautverhütungsmittel, Stabilisatoren, Sikkative, oberflächenaktive Stoffe, Viskositätsregulatoren und organische, wasserverträgliche Lösemittel.

Zusatzstoffe der beschriebenen Art können in praxisüblichen Mengen zugemischt werden. Die Art und Menge solcher Zuschläge richten sich stets nach dem jeweilig zu behandelnden Werkstoff, seinem Verwendungszweck sowie dem Behandlungsverfahren und sind durch wenige orientierende Versuche leicht zu ermitteln. Unter den auszuschließenden, porenverschließenden Zusatzstoffen gemäß Merkmal 3 des Anspruchs 1 werden nur solche verstanden, welche in ausreichender Konzentration vorliegend bei der Applikation des Behandlungsmittels einen Porenverschluß des Holzes herbeiführen.

Die erfindungsgemäßen Behandlungsmittel haben im allgemeinen einen Bindemittelgehalt von 1 bis 30, vorzugsweise 5 bis 15 Massen-%, und können nach allen bekannten Verfahren des Standes der Technik (vgl. DIN 68 800, Blatt 3) appliziert werden. Dabei ist die erzielbare Schutzwirkung — wie dem Fachmann bekannt ist — eng mit dem Behandlungsverfahren verknüpft.

Besonders wirksam und daher bevorzugt ist ein Imprägnierverfahren, bei dem Holz und Holzwerkstoffe gegebenenfalls unter Druck oder Vakuum einer Volltränkung unterworfen werden.

Die nachfolgenden Beispiele dienen zur Erläuterung der Erfindung. Unter Teilen werden Massenteile und unter Prozenten Massenprozente verstanden, falls nicht anders angegeben.

## Beispiele

Für die Herstellung der in den erfindungsgemäßen Behandlungsmitteln eingesetzten Bindemittel werden die in Tabelle 1 beschriebenen Epoxide eingesetzt :

(Siehe Tabelle 1 Seite 5 f.)

Tabelle 1

Eingesetzte Epoxide

| | Basispolymer | | | Epoxid | |
|---|---|---|---|---|---|
| | $\bar{M}_n$ (dampfdruck-osmometrisch) | Iodzahl (g Iod/100 g) | Doppelbindungs-verteilung (IR) 1,4-cis/1,4-trans/Vinyl | Gesamt-Sauerstoff (%) | Epoxid-Sauerstoff (DIN 16 945) (%) |
| 1 | 1 700 | 445 | 74 - 25 - 1 | 8,0 | 5,9 |
| 2 | 1 700 | 445 | 74 - 25 - 1 | 11,4 | 8,1 |
| 3 | 1 700 | 445 | 74 - 25 - 1 | 5,2 | 4,5 |

Aminierung

Zur Aminierung werden die Epoxidgruppen tragenden 1,3-Butadienpolymerisate in an sich bekannter Weise mit den primären und/oder sekundären Aminen umgesetzt (DE-PS 28 38 930, Beispiele 3 bis 7).

Aminaddukt 1

94,2 Teile epoxidiertes 1,3-Butadienpolymerisat (Epoxid 1) werden unter Stickstoff mit 17,5 Teilen Diethanolamin gemischt und unter Rühren bei 190 °C zur Reaktion gebracht. Nach 6 Stunden ist das Amin praktisch quantitativ umgesetzt. Das Produkt enthält 145 mg Atom Stickstoff/100 g Addukt und 2,5 % Restepoxidsauerstoff. Das hochviskose Produkt zeigt eine blaßgelbe Färbung.

Aminaddukt 2

Die Herstellung des Aminadduktes 2 erfolgt analog der Herstellung von Aminaddukt 1.

Aminaddukt 3

59,7 Teile Epoxid 3 werden bei 30 °C mit 16,7 Teilen einer 42,3 %igen wäßrigen Dimethylaminlösung und 13,6 Teilen THF versetzt. Die Mischung wird in einen Stahlautoklaven gefüllt. Nach Aufdrücken von 10 bar $N_2$ wird innerhalb von 2 1/2 Stunden auf 150 °C aufgeheizt und 10 Stunden bei dieser Temperatur belassen. Als Reaktionsprodukt wird eine weiße Emulsion erhalten. Die Lösemittel werden im Vakuum abgezogen. Das so isolierte Aminaddukt 7 enthält 180 mg Atom Stickstoff/100 g Addukt und einen Restepoxid-Gehalt von 0,9 %.

Tabelle 2

Aminierte Epoxide (Aminaddukte)

| Amin-addukt | Basis-epoxid | Gehalt an tertiärem Stickstoff+) (mg Atom N/100 g) | Restepoxid-geh. (%) |
|---|---|---|---|
| 1 | 1 | 147 (a) | 2,5 |
| 2 | 2 | 280 (a) | 0,9 |
| 3 | 3 | 180 (b) | 0,9 |

+) Probe mit THF verdünnt, mit wäßriger HCl angesäuert und mit n/10 methanolischer KOH potentiometrisch titriert.
(a) mit Diethanolamin aminiert,
(b) mit Dimethylamin aminiert.

Quaternierung

Produkt 4

200,7 Teile Aminaddukt 2 werden mit 71,1 Teilen einer 73 %igen wäßrigen Milchsäure entsprechend einem Neutralisationsgrad von ca. 100 % bei 20 °C gerührt und mit 666,4 Teilen Wasser versetzt. Es wird eine homogene Mischung erhalten. Dann werden bei dieser Temperatur 33,2 Teile Propylenoxid eingerührt und 1 Stunde auf 70 °C erhitzt. Es wird eine Reaktionsmischung erhalten, welche sich mit Wasser zu einer klaren gelben Lösung verdünnen läßt und folgende Eigenschaften zeigt :

Trockenrückstand (2 Stunden bei 120 °C) :
29,3 g/100 g Reaktionsaustrag
Aminstickstoff : < 5 mmol/100 g Reaktionsaustrag

Produkt 5

Aus 100 Teilen Aminaddukt 3 und 771 Teilen Wasser wird bei 15 °C unter Rühren und Durchleiten eines $CO_2$-Stromes eine niedrig viskose, milchige homogene Flüssigkeit erhalten, in welche eine Lösung von 23,8 Teilen Ethylenoxid in 105 Teilen Wasser eingerührt wird. Die erhaltene Mischung wird in einen

Stahlautoklaven gegeben, $CO_2$ wird bis zu einem Druck von 10 bar aufgedrückt und die Reaktionsmischung 3 Stunden auf 80 °C erhitzt, wobei sich ein Druck von ca. 20 bar einstellt. Nach dem Abkühlen und Entspannen wird eine blaßgelbe, durchscheinende Lösung mit folgenden Eigenschaften erhalten :

Trockenrückstand (2 Stunden bei 120 °C) :
11,5 g/100 g Reaktionsaustrag
Aminstickstoff : < 4 mmol/100 g Reaktionsaustrag

Produkt 6

162 Teile Aminaddukt 1 werden mit 29,4 Teilen einer wäßrigen 73 %igen Milchsäure bei 40 °C gerührt, bis eine homogene Mischung erhalten wird. Nach Zugabe von 250 Teilen Wasser werden bei dieser Temperatur 13,8 Teile Propylenoxid eingerührt und 3 Stunden auf 70 °C erhitzt. Es wird eine Reaktionsmischung erhalten, die mit 200 Teilen Wasser zu einer klaren, gelben Lösung verdünnt werden kann.

Trockenrückstand (2 Stunden bei 120 °C) :
30,0 g/100 g Reaktionsaustrag
Aminstickstoff : < 2 mmol/100 g Reaktionsaustrag

Anwendungstechnische Versuche mit erfindungsgemäßen Behandlungsmitteln.

Herstellung der Behandlungsmittel

Behandlungsmittel I

50 Teile Produkt 4 werden mit 96,5 Teilen Wasser verdünnt. Das erhaltene Behandlungsmittel I hat einen Feststoffgehalt von 10 %.

Behandlungsmittel II

100 Teile Produkt 5 werden mit 15 Teilen Wasser verdünnt. Es wird eine klare, gelbe Lösung mit einem Feststoffgehalt von 10 % erhalten.

Behandlungsmittel III

137 Teile Produkt 4 werden mit 244 Teilen Wasser verdünnt. In der erhaltenen klaren Lösung werden 20,2 Teile $CuSO_4 \cdot 5H_2O$ gelöst. Es wird eine klare, blaue Lösung erhalten (pH = 4,4, Feststoffgehalt = 13,2).

Behandlungsmittel IV

139 Teile Produkt 6 werden mit 257 Teilen Wasser verdünnt. Es wird eine klare, gelbe Lösung erhalten, in der 20,7 Teile $KHF_2$ (techn.) gelöst werden (pH = 3,9, Feststoffgehalt = 15,0).

Vergleichslösung A

29,3 Teile Aminaddukt 1 werden mit 4 Teilen Kaliumhydrogenfluorid (techn.) (entsprechend einem Neutralisationsgrad von ca. 100 %) bei 60 °C gerührt und mit 300 Teilen Wasser verdünnt. Es wird eine klare, gelbe Lösung wasserähnlicher Viskosität erhalten (pH = 3,7).

Vergleichslösung B

31,5 Teile Aminaddukt 3 werden mit 7 Teilen einer 73 %igen wäßrigen Milchsäure (entsprechend einem Neutralisationsgrad von ca. 100 %) bei 60 °C gerührt und mit 278 Teilen Wasser verdünnt. Es wird eine klare Lösung erhalten, die 10 % Feststoff enthält.

Vergleichslösung C

65,0 Teile Aminaddukt 1 werden mit 16,3 Teilen einer ca. 52 %igen wäßrigen Milchsäure (entsprechend einem Neutralisationsgrad von ca. 100 %) bei 60 °C gerührt und mit 631 Teilen Wasser verdünnt. Der wäßrigen Lösung werden 22 Teile $CuSO_4 \cdot 5H_2O$ zugesetzt. Die klare, blaue Vergleichslösung C hat einen Feststoffgehalt von ca. 12 %.

Aufnahmevermögen der Behandlungsmittel für anorganische Salze und Säuren

In jeweils 100 g des Behandlungsmittels werden die in der folgenden Tabelle 3 aufgeführten Zusätze (in g bei 20 °C) portionsweise eingerührt, bis die Löslichkeitsgrenze erreicht ist, das polymere Bindemittel koaguliert oder die Zugabe nicht fortgesetzt wird (gekennzeichnet durch $^{+)}$).

Tabelle 3

Aufnahmevermögen der Behandlungsmittel für anorganische Salze und Säuren

| | Behandlungsmittel | | zum Vergleich | |
|---|---|---|---|---|
| | I | II | A | B |
| $H_3BO_3$ | 5,7 | 5,5 | 1,8 | 4,1 |
| $KHF_2$ (techn.) | > 9,5$^{+)}$ | > 9,0$^{+)}$ | 4,9 | 5,3 |
| $CuSO_4 \cdot 5H_2O$ | > 16,0$^{+)}$ | > 15,1$^{+)}$ | 3,1 | 3,3 |

Die Tabelle 3 zeigt, daß das Aufnahmevermögen der mit den erfindungsgemäßen Bindemitteln hergestellten Behandlungsmittel für anorganische Salze und Säuren gegenüber den mit den nicht erfindungsgemäßen Bindemitteln hergestellten Behandlungsmitteln deutlich und in nicht vorhersehbarer Weise verbessert ist.

Imprägnierversuche

Die Imprägnierversuche wurden mit Kiefernsplintholzklötzchen (14 × 22 × 50) nach dem Volltränkverfahren (DIN 52 160, Seiten 2 und 3) durchgeführt. Die Ergebnisse sind in Tabelle 4 zusammengestellt.

Tabelle 4

Imprägnierversuche

| Behandlungsmittel (1) | Trockenaufnahme (%) gesamt (2) | Trockenaufnahme (%) Schutzmittel (3) | relative Trockenaufnahme (%) (4) |
|---|---|---|---|
| Behandlungsmittel III | 26,5 | 6,4 | 13,0 |
| Behandlungsmittel IV | 28,3 | 9,4 | 14,9 |
| Vergleichslösung C | 15,2 | 2,4 | 11,8 |

Die Bestimmung der Trockenaufnahme bzw. der relativen Trockenaufnahme erfolgte nach den Gleichungen :

Trockenaufnahme (%) = [(W − T/T] · 100

relative Trockenaufnahme (%) = [(W − T/I − T)] · 100

mit

W = Gewicht des Holzes, imprägniert, getrocknet

T = Gewicht des Holzes, unbehandelt, getrocknet

I = Gewicht des Holzes, imprägniert, ohne Trocknung.

Zur Berechnung der Schutzmittel-Trockenaufnahme (Spalte 3) wurde W indirekt durch Bestimmung der restlichen Schutzmittelmenge im Behandlungsmittel nach der Imprägnierung bestimmt.

Wie aus der Tabelle 4 zu ersehen ist, entspricht die relative Trockenaufnahme (Spalte 4) für die Behandlungsmittel III und IV sehr gut ihren Feststoffgehalten. Zum anderen zeigt die analytische Untersuchung der zur Imprägnierung der Prüfkörper benutzten überschüssigen Lösung, daß durch die Behandlung die Zusammensetzung der Behandlungsmittel nicht verändert wird. Hieraus ist ersichtlich, daß sowohl das Bindemittel als auch das biozid wirkende Holzschutzmittel in die Prüfkörper penetrieren.

Werden die mit den Behandlungsmitteln III und IV imprägnierten Holzklötzchen aufeinandergestapelt, kleben sie an den Berührungsflächen nicht zusammen, d. h. das Bindemittel zeigt das geforderte Penetrationsverhalten und wird nicht auf der Oberfläche der Prüfkörper abgeschieden.

Wird ein mit dem Behandlungsmittel III imprägniertes Prüfklötzchen aufgespalten, ist ersichtlich, daß der biozid wirkende Zusatz (hier $CuSO_4$) den Prüfkörper völlig durchdrungen hat.

Ein entsprechender Nachweis kann für ein mit dem fluoridhaltigen Behandlungsmittel IV imprägnierten Prüfkörper (Farbreaktion mit ZA-Reagenz ; Lit. : H. Becker : « Über den Nachweis und die Bestimmung von Holzschutzmitteln im Holz », Seifen-Öle-Fette-Wachse, 23. Jahrgang, Nr. 26/1967, Seite 1010) geführt werden. Bei den mit Vergleichslösung C imprägnierten Prüfkörpern werden geringere Penetrationstiefen beobachtet.

Desweiteren ist aus Tabelle 4 ersichtlich, daß mit den erfindungsgemäßen Behandlungsmitteln erheblich größere Anteile an Holzschutzmitteln in die Prüfkörper eingebracht werden können als mit der zum Vergleich eingesetzten Vergleichslösung C (Spalte 3).

## Ansprüche

1. Verfahren zur Behandlung von Holz und Holzwerkstoffen, welche offene Poren aufweisen, mit wäßrigen Behandlungsmitteln unter Anwendung der bekannten Methoden der Imprägniertechnik, wobei das Behandlungsmittel

1) ein wasserlösliches oder wasserdispergierbares, oxidativ trocknendes, organisches Bindemittel auf Basis eines niedermolekularen, gegebenenfalls modifizierten 1,3-Butadienpolymerisates,

2) gegebenenfalls ein Holzschutzmittel, und

3) gegebenenfalls in der Imprägnier- und Lackiertechnik und verwandten Techniken übliche Zusatzstoffe, wobei porenverschließende Zusatzstoffe ausgeschlossen sind, enthält,

dadurch gekennzeichnet, daß

4) das Bindemittel das zusätzliche Kriterium erfüllt, daß es ein quartäre Ammoniumgruppen tragendes Polymerisat ist, das durch das folgende, bekannte Herstellungsverfahren erhalten ist :

4.1) Umsetzung eines Epoxidgruppen enthaltenden Polymerisates, wobei das Basispolymerisat aus $\geq 70$ Mol-% 1,3-Butadien aufgebaut ist, mit einem sekundären und/oder primären aliphatischen Amin der Formel I

$$R^1—NH—R^2 \quad (I)$$

in der $R^1$ und $R^2$ unabhängig voneinander ein Wasserstoffatom, ein Alkyl-, Hydroxyalkyl- oder Alkoxyalkylrest mit 1 bis 7 C-Atomen bedeuten, wobei für die Oxyfunktion die α-Stellung ausgeschlossen ist, und

4.2) Umsetzung des Aminierungsproduktes mit einem niedermolekularen Monoepoxid, so daß 0,05 bis 0,5 Mol der quaternierbaren Aminogruppen/100 g des Aminierungsproduktes quaterniert werden.

2. Verfahren nach Anspruch 1 unter Anwendung eines Volltränkverfahrens.

## Claims

1. A process for the treatment of wood or a wood product having open pores with an aqueous treating agent using a known impregnation technique, in which the treating agent contains

1) an oxidatively drying organic binder which is soluble or dispersible in water and is based on an optionally modified, low molecular weight 1,3-butadiene polymer,

2) optionally a wood preservative, and

3) optionally one or more additives conventional in the impregnating and painting industries or known techniques, pore-closing additives being excluded,

characterised in that the binder fulfils the additional criterion

4) that it is a polymer bearing quaternary ammonium groups and has been obtained by the following known production process, namely :

4.1) reaction of a polymer containing epoxy groups, such that the basic polymer is made up of more than or equal to 70 mol % 1,3-butadiene, with a secondary and/or primary amine of the formula I

$$R^1—NH—R^2 \quad (I)$$

where $R^1$ and $R^2$ independently of one another are hydrogen, or alkyl, hydroxyalkyl or alkoxyalkyl of 1 to 7 carbon atoms, the α-position being excluded for the oxyfunction, and

4.2) reaction of the amination product with a low molecular weight monoepoxide so that 0.05 to 0.5 mole of the quaternisable amino groups are quaternised per 100 g of the amination product.

2. A process according to claim 1 using a full impregnation process.

**Revendications**

1. Procédé de traitement du bois et des matériaux ligneux qui présentent des pores ouverts, par des agents de traitement aqueux, avec application des modes opératoires connus de la technique d'imprégnation, l'agent de traitement contenant :

1) un liant organique soluble dans l'eau ou dispersible dans l'eau, séchant par oxydation, à base d'un produit de polymérisation de 1,3-butadiène de bas poids moléculaire, éventuellement modifié,

2) éventuellement un agent de protection du bois et

3) le cas échéant, des additifs usuels dans la technique d'imprégnation et de peinturage et des techniques apparentées, les additifs qui bouchent les pores étant exclus,

ledit procédé étant caractérisé par le fait :

4) que le liant répond à ce critère supplémentaire d'être un produit de polymérisation portant des groupes ammonium quaternaire que l'on a obtenu par le procédé de préparation connu suivant :

4.1) réaction d'un produit de polymérisation contenant des groupes époxyde, le produit de polymérisation de base étant constitué par au moins 70 mol % de 1,3-butadiène, sur une amine aliphatique secondaire et/ou primaire de la formule I

$$R^1—NH—R^2 \qquad (I)$$

dans laquelle $R^1$ et $R^2$ représentent, indépendamment l'un de l'autre, un atome d'hydrogène, un radical alkyle, hydroxyalkyle ou alcoxy-alkyle contenant de 1 à 7 atomes de carbone, la position $\alpha$ étant exclue pour la fonction oxy, et

4.2) réaction du produit d'amination sur un mono-époxyde de bas poids moléculaire, de sorte que 0,05 à 0,5 mole des groupes amine quaternisables par 100 g du produit d'amination se quaternisent.

2. Procédé selon la revendication 1, avec application d'un mode opératoire à imprégnation complète.